# EUROPEAN PATENT APPLICATION

(11) **EP 3 285 109 A1**
(43) Date of publication of application: **21.02.2018**
(21) Application number: 16779895.8
(22) Date of filing: 28.03.2016
(51) Int. Cl.: G02C 7/04

(54) **CONTACT LENS FOR SUPPRESSING PROGRESSION OF MYOPIA, METHOD FOR DESIGNING SAME, AND METHOD FOR MANUFACTURING SAME**

(30) Priority: 13.04.2015 JP 2015082068
(71) Applicant: Menicon Co., Ltd., Nagoya-shi, Aichi 460-0006 (JP)
(72) Inventor: FUJIKADO, Takashi, Suita-shi, Osaka 565-0871 (JP); SUZAKI, Asaki, Nagoya-shi, Aichi 460-0006 (JP); NAKADA, Mitsuhiko, Nagoya-shi, Aichi 460-0006 (JP); SAKAI, Yukihisa, Nagoya-shi, Aichi 460-0006 (JP)
(74) Representative: Cabinet Plasseraud
(86) International application number: PCT/JP2016/059802
(87) International publication number: WO 2016/167104

(57) **Abstract**

A designing method of a contact lens for myopia progression suppression including: providing a tonic accommodation relaxation region in which an additional power whose maximum value is from +0.25 to +0.75 diopters is set with respect to a proper correction power, the additional power being capable of relaxing a tonic accommodation without improving an aberration off an optical axis of an eye and an accommodation lag on the optical axis; and providing a proper correction region in which the additional power is not set on an optical center.

## Description

### TECHNICAL FIELD

The present invention relates generally to a contact lens having a myopia progression suppression effect used to suppress the progression of myopia in the human eye. In particular, the present invention pertains to a designing method or the like of a novel contact lens for myopia progression suppression developed on the basis of an optical and physiological mechanism that is able to attain a myopia progression suppression effect, which was newly found by the inventors.

### BACKGROUND ART

It has been pointed out that myopia in the human eye not only brings inconvenience to our everyday life but also increases risk of disorders such as retinal detachment and glaucoma as the myopia gets deteriorated. Especially in recent years, the prevalence of myopia has been increasing so much that the social demand for technologies of myopia progression suppression is growing.

Conventionally, as one of such technologies of myopia progression suppression, proposed is a contact lens for myopia progression suppression.

Regarding the suppression action of myopia progression using a contact lens, two actions are proposed from the past, namely, "myopia progression suppression action based on off-axis aberration theory" and "myopia progression suppression action based on accommodation lag theory," and contact lenses designed based on the respective theories are proposed. Specifically, a contact lens for myopia progression suppression designed based on the former off-axis aberration theory is disclosed in Japanese Domestic Publication of International Patent Application No. JP-A-2007-511803 (Patent Document 1), while a contact lens for myopia progression suppression designed based on the latter accommodation lag theory is disclosed in International Publication No. WO 96/16621 (Patent Document 2).

The contact lens for myopia progression suppression based on the former off-axis aberration theory is made on the basis of the concept that for a myopic eye whose ocular axis length is long, generation of a hyperopic focal error in the incident light inclined against the optical axis direction causes myopia progression due to overextension of the ocular axis length. Therefore, it attempts to suppress the myopia progression due to further growth of the ocular axis length by setting a prescribed additional power (Add) to the incident light inclined against the optical axis direction in order to bring back the focal position having the hyperopic focal error off the optical axis, which deviated deeper past the retina, to the front of the retina.

Meanwhile, the contact lens for myopia progression suppression based on the latter accommodation lag theory is made on the basis of the concept that when the human eye performs focusing, incomplete accommodation (accommodation lag, namely differential between the accommodation stimulus and the accommodation reaction), which is generated in order to minimize the accommodation to the extent that he/she does not become aware of an image blur, causes myopia progression due to overextension of the ocular axis length as a hyperopic focal error. Thus, it attempts to suppress the myopia progression due to further growth of the ocular axis length by setting a prescribed additional power to the incident light in the optical axis direction so as to reduce or eliminate the focal position having the hyperopic focal error on the optical axis and bring it near to the retina.

However, for the contact lens for myopia progression suppression based on the former off-axis aberration theory, in consideration of an amount of displacement of the lens on the cornea, high additional power of as much as +2.0D (diopters) is required for correcting the hyperopic focal error in the retinal peripheral region. That revealed the problems of deterioration of subjective QOV (Quality of Vision), and especially during far vision, posing the problems that the rate of light collection on the retina may be reduced, or a myopic focal error is likely to occur. Moreover, according to Sankaridurg et al. (P.Sankaridurg et al. Decrese inRate of Myopia Progression with a Contact Lens Designed to Reduce Relative Peripheral Hyperopia: One-Year Results. IOVS 2011;52:9362-9367.), even if a contact lens to which an additional power of +2.0D is set is worn, it cannot correct focal errors off the optical axis over the entire range of the wide vision range with respect to the eye optical axis (10 degrees, 20 degrees, 30 degrees, and 40 degrees for the ear-side visual angle and the nose-side visual angle), but correction to the focal error only for the nose side is confirmed. Thus, it can be said that myopia progression suppression through correction to the focal error off the optical axis is difficult in actuality.

In light of that, the inventors has conducted arduous researches regarding provision of a contact lens for myopia progression suppression based on the latter accommodation lag theory, and reached an unexpected conclusion that the myopia progression suppression action based on the accommodation lag theory itself was wrong. Whereas the specific fact will be described later showing test results, it was conventionally thought that by setting an additional power to the contact lens, it would be possible to suppress the accommodation lag on the eye optical axis generated during near vision and thus to inhibit overextension of the ocular axis length caused by the hyperopic focal error. However, the inventors have become aware of the new fact that, even by setting an additional power to the contact lens, the accommodation lag on the eye optical axis generated during near vision cannot be significantly suppressed.

In addition, the inventors newly discovered the optical and physiological mechanism that is able to attain a myopia progression suppression effect, and achieved confirmation thereof by tests. Accordingly, based on the new mechanism of myopia progression suppression effect, they have completed the present invention related to a designing method or the like of a contact lens for myopia progression suppression that is novel and not encountered in the background art.

### BACKGROUND ART DOCUMENTS

### PATENT DOCUMENTS

Patent Document 1: JP-A-2007-511803
Patent Document 2: WO 96/16621

### SUMMARY OF THE INVENTION

### PROBLEM THE INVENTION ATTEMPTS TO SOLVE

The present invention has been developed in view of the above-described matters as the background, and it is an object of the present invention to provide a designing method and a manufacturing method of a contact lens having a myopia progression suppression capability, and a novel contact lens for myopia progression suppression made on the basis of the mechanism of myopia progression suppression effect that is newly discovered by the inventors.

### MEANS FOR SOLVING THE PROBLEM

One mode of the present invention related to a novel designing method of a contact lens for myopia progression suppression provides a designing method of a contact lens for myopia progression suppression comprising: providing a tonic accommodation relaxation region in which an additional power whose maximum value is from +0.25 to +0.75 diopters is set with respect to a correction power that is required for realizing a proper correction, the additional power being capable of relaxing a tonic accommodation without improving an aberration off an optical axis and an accommodation lag on the optical axis; and providing a proper correction region in which the additional power is not set at least on an optical center.

Also, one mode of the present invention related to a novel manufacturing method of a contact lens for myopia progression suppression provides a manufacturing method of a contact lens for myopia progression suppression comprising: determining lens front and back surface shapes for realizing the correction power of the proper correction region and the additional power of the tonic accommodation relaxation region that are set according to the above-described designing method of the contact lens for myopia progression suppression related to the present invention; and manufacturing the contact lens having the lens front and back surface shapes.

Moreover, one mode of the present invention related to a novel contact lens for myopia progression suppression provides a contact lens for myopia progression suppression comprising: a tonic accommodation relaxation region in which an additional power whose maximum value is from +0.25 to +0.75 diopters is set with respect to a correction power that is required for realizing a proper correction, the additional power being capable of relaxing a tonic accommodation without improving an aberration off an optical axis and an accommodation lag on the optical axis; and a proper correction region in which the additional power is not set at least on an optical center.

In a preferred mode of the contact lens for myopia progression suppression according to the present invention, for example, the proper correction region is provided in a center portion thereof, a constant additional power region is provided in an outer peripheral portion of an optical part with a prescribed radial width, a graded additional power region is provided in which the additional power gradually changes from the proper correction region toward the constant additional power region, and the constant additional power region and the graded additional power region constitute the tonic accommodation relaxation region.

In accordance with another preferred mode of the present invention, when providing the proper correction region, the graded additional power region, and the constant additional power region, for example, the graded additional power region is set within a range such that 0 mm < r ≤ 3.5 mm where r is a radial dimension from the optical center, and the additional power in an outermost peripheral portion of the graded additional power region is from +0.25 to +0.75 diopters.

### EFFECT OF THE INVENTION

The present invention has been developed on the basis of suggestion of the new optical and physiological mechanism of myopia progression suppression and confirmation thereof by the test method invented by the inventors, which replaces the conventional myopia progression suppression action based on the accommodation lag theory proposed as an academic theory. According to the designing method related to the present invention, even under the condition where the myopia progression suppression action based on the accommodation lag theory is denied, it is possible to design an effective contact lens for myopia progression suppression that is able to theoretically and testingly suggest the myopia progression suppression capability while ensuring good Quality of Vision (QOV) during wear.

Moreover, according to the manufacturing method related to the present invention, it is possible to manufacture a contact lens having both effective myopia progression suppression capability and good QOV during wear with optical characteristics obtained by the designing method of the present invention.

Furthermore, the contact lens constructed according to the present invention is able to exhibit effective myopia progression suppression action and good QOV during wear based on the optical and physiological mechanism that is theoretically and testingly describable, under the condition where the myopia progression suppression action based on the accommodation lag theory is denied.

### BRIEF DESCRIPTION OF THE DRAWINGS

FIG. 1 is a vertical cross section view of an eye optical system suitable for explaining a myopia progression suppression action based on the conventional accommodation lag theory.
FIG. 2 is a graph showing actual measurements of relationship between the additional power of the contact lens and the amount of the accommodation lag.
FIG. 3 is a view suitable for explaining a device and a method for measuring the amount of accommodation reaction of the eye using a front-open type binocular wave sensor invented by the inventors.
FIG. 4 is a graph showing power profiles in the optical regions of the contact lenses used in the tests.
FIG. 5 is a graph showing the test results of measuring the amount of accommodation reaction of the eye using the measuring device of FIG. 3.
FIG. 6 is a view suitable for explaining an evaluation scale used for measuring QOV together with the measurement of the amount of accommodation reaction of the eye using the measuring device of FIG. 3.
FIG. 7 is a graph showing the measurement results of QOV using the evaluation scale of FIG. 6.
FIG. 8 is a view suitable for explaining a theory based on an optical and physiological mechanism of myopia progression suppression action found by the inventors.
FIG. 9 is a front view for illustrating a contact lens constructed according to the present invention.

### EMBODIMENTS FOR CARRYING OUT THE INVENTION

A fuller understanding of the present invention will be provided through the following detailed description of the preferred embodiment of the invention with reference to the accompanying drawings.

First, in order to understand the designing method of a contact lens for myopia progression suppression according to the present invention, we will describe the myopia progression suppression action based on the accommodation lag theory known in the art. Next, we will describe the reason why the tests by the inventors led to the conclusion that such idea is not appropriate.

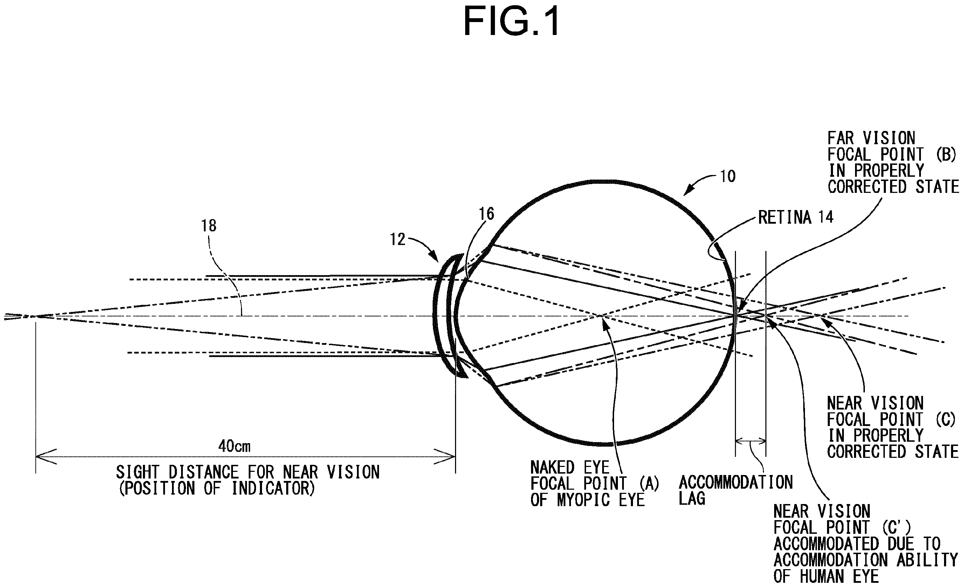

FIG. 1 depicts a view suitable for explaining an eye optical system showing an optical path of the incident light for a myopic eye 10. As indicated by the dashed line in FIG. 1, the myopic eye 10 has a naked eye focal point A which is positioned in front of a retina 14 to a cornea 16 side on the optical axis with respect to the generally parallel incident light beam assuming a situation of far vision, and cannot recognize a clear image during far vision. Accordingly, by wearing a contact lens 12 on the cornea 16 for which a proper correction power is set to provide a proper vision for far vision, the focal point of the generally parallel incident light beam is positioned to a properly corrected focal point B, which is roughly the fovea on the retina 14, as indicated by the solid line in FIG. 1.

However, in a worn condition of the contact lens 12 of the proper correction power, with respect to the incident light beam 40 cm away from the eye assuming a situation of near vision like reading a book, correction of myopia turns out excessive, as indicated by the two-dotted line in FIG. 1. Accordingly, a near vision focal point C is formed behind the retina 14 on a lens optical axis 18. This near vision focal point C is brought to a condition of clear vision by being accommodated to the retina 14 side due to the accommodation ability of the myopic eye 10.

At that time, the accommodation of the near vision focal point C due to the accommodation ability of the myopic eye 10 is generally performed to the extent not to reach the proper position on the retina 14. Namely, as indicated by the two-dotted line in FIG. 1, the focal point is positioned at the near vision focal point C' that does not reach the retina 14 but provides a clear vision which is not inconvenient on the lens optical axis 18. The differential between the near vision focal point C' and the proper focal point position on the retina 14 on the optical axis is called "accommodation lag." The amount of the accommodation lag is seen as a lack of accommodation by 0.50 to 0.75 diopters in average in youths aged 20 to 25 in response to an accommodation stimulus set at 40 cm in front of the eye. According to the accommodation lag theory, the lack of accommodation of the human eye during near vision is considered to be one of the causes of myopia progression due to the growth of the ocular axis length.

For myopia progression suppression based on the conventional accommodation lag theory, by setting a prescribed additional power to a peripheral portion of the optical region of the contact lens 12 worn by the myopic eye 10, a prescription is provided for making the accommodation lag, which is considered to be a trigger or a factor for growth of the ocular axis length, close to zero. That is, the myopia progression suppression based on the conventional accommodation lag theory assumes that the additional power set to the contact lens 12 to be worn is able to accommodate the accommodation lag, and the accommodation lag changes depending on the magnitude of the additional power.

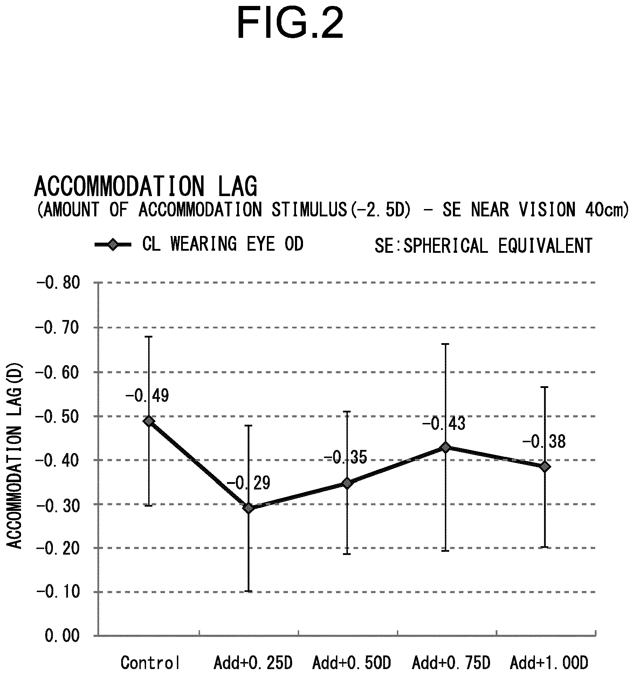

However, when changes in the accommodation lag were actually measured by using four types of test lenses for which different additional powers were set to the respective peripheral portions, each of which is the contact lens 12 that provides a far vision focal point properly corrected on the optical axis, and having them worn by the same test subject, no correlation was found between the additional power and the accommodation lag, as shown in FIG. 2. Specifically, the contact lenses 12, for which the respective additional powers of +0.25D, +0.50D, +0.75D, +1.00D were set in the mode of gradually increasing from the proper correction power set to the center of the optical part toward the periphery, were worn. In those states, measurements were made on the accommodation lag generated during near vision set at 40 cm in front of the eye which is equivalent to the amount of accommodation stimulus of -2.5D. The results are shown in FIG. 2. In comparison with the spherical contact lens (control) which provides the properly corrected focal point, the accommodation lag is found to be on the decrease during wear of the lens having the additional power of +0.25D. However, even the additional power is increased, there are cases where the accommodation lag becomes greater on the contrary. Thus, obviously it cannot say that the additional power is able to improve the accommodation lag.

Accordingly, we inevitably have to recognize that there was a mistake in the logic of the myopia progression suppression mechanism based on the accommodation lag theory that myopia progression will be suppressed by wearing the contact lens for which the additional power is set and appropriately improving the accommodation lag owing to the additional power.

Meanwhile, through the past statistics, tests, or the like, the inventors confirmed that, in comparison with the case of wearing the spherical contact lens which provides the properly corrected focal point, by wearing the contact lens for which the additional power is set to the peripheral portion, the myopia progression suppression effect itself is observed. Therefore, they considered that the logic of the myopia progression suppression mechanism based on the accommodation lag theory itself was wrong, and that there separately exists a correct logic as the myopia progression suppression mechanism owing to the contact lens for which the additional power is set, and estimation and tests were made. In particular, through invention of a novel test device and test method, the inventors succeeded in objectively measuring the accommodation amount of the crystalline lens in the worn state of the contact lens, which was not realized in the past.

As a result, the inventors were able to suggest an optical and physiological novel mechanism of the myopia progression suppression owing to the contact lens for which the additional power is set, based on the objective data which were confirmed through the tests. Consequently, in accordance with the novel mechanism of the myopia progression suppression, they realized a novel designing method and manufacturing method of a contact lens which is able to exhibit an effective myopia progression suppression action, making it possible to provide a novel contact lens for myopia progression suppression, and have completed the present invention.

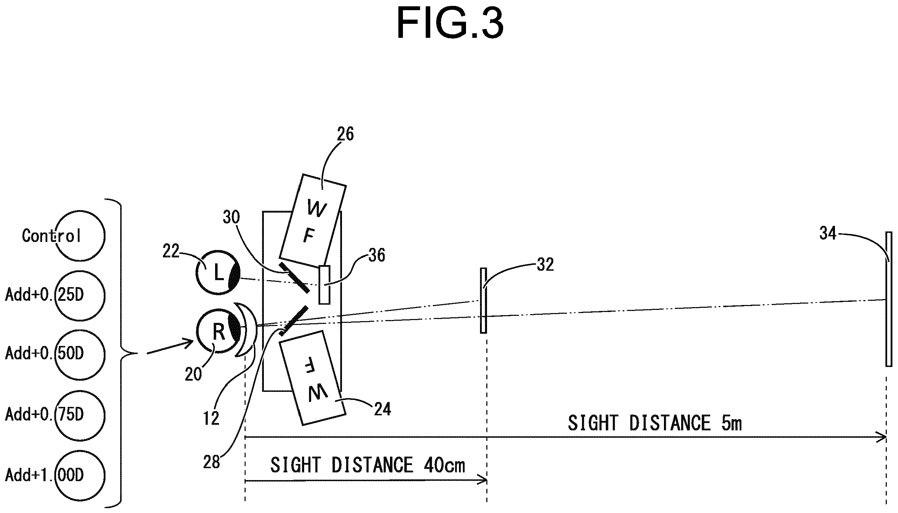

FIG. 3 depicts a basic structure of the test device used by the inventors. The test device uses a front-open type binocular wave sensor. In front of a right eye 20 and a left eye 22, which are each positioned by the head of the test subject being fixed by a chin support and a forehead pad, a right-eye wave sensor 24 and a left-eye wave sensor 26 are respectively equipped via half mirrors 28, 30. The wave sensor is well known in the field of the eye optical system, and, for example, by using a Shack-Hartmann sensor, is able to measure wave aberration in a reflected light from a macula lutea of an eyeball to which a measurement light is projected, and to obtain optical characteristics of the eye based on distortion or the like of the wave fronts having the same phase by utilizing the measurement results.

For the test device using such binocular wave sensor, the contact lens 12 was worn only by one eye (for example, right eye) 20, making it possible to visually observe indicators 32, 34. As the indicators, used were the indicator 32 for near vision at the sight distance of 40 cm, and the indicator 34 for far vision at the sight distance of 5 m. The other eye (for example, left eye) 22 served as a naked eye that does not wear the contact lens, and a screening plate 36 was located instead of the indicator. With this arrangement, for the naked eye (depicted left eye) 22, it was configured such that the accommodation amount of the crystalline lens of the eye, which is the accommodation reaction of the naked eye which synchronized with the lens wearing eye (depicted right eye) 20, was able to be measured.

During the tests, each test subject wore the contact lens 12 on his/her dominant eye, and the differential between the accommodation amount of the crystalline lens of the eye during staring the indicator 32 at the sight distance of 40 cm and the accommodation amount thereof during staring the indicator 34 at the sight distance of 5 m was obtained as "the eye refraction value during far vision - the eye refraction value during near vision." Since the measurement value of the accommodation amount obtained in this way is measured with the naked eye as the subject, the change in the accommodation amount of the eye from the far vision state to the near vision state (amount of change in the eye refraction value) can be determined as the accommodation amount of the crystalline lens of the eye with the optical characteristics of the contact lens removed.

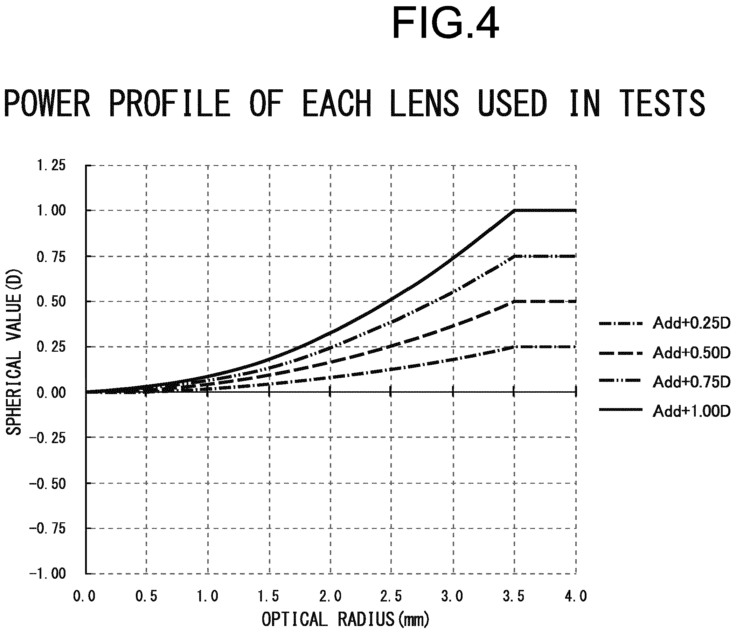

For measurement, in addition to a control, which is the spherical contact lens, four types of the contact lenses 12 for which the respective additional powers (Add) of +0.25D, +0.50D, +0.75D, and +1.00D were set to the peripheral portion, were employed. In the worn state of several types of the contact lenses 12 having different additional powers in this way, by measuring the accommodation amount of the naked eye, an effect caused by the change in the additional power on the change in the accommodation amount of the naked eye (non-wearing eye) was actually measured. The lens power profile of each contact lens 12 used in the tests is shown in FIG. 4. Besides, the lens power on the optical center of the contact lens 12 of each additional power was set equal to the lens power of the control, and was completely corrected by glasses as needed in order to be the proper correction power. The contact lenses 12 of four types of additional powers were worn on the test subject in a random fashion, and the correction value by the glasses was set constant.

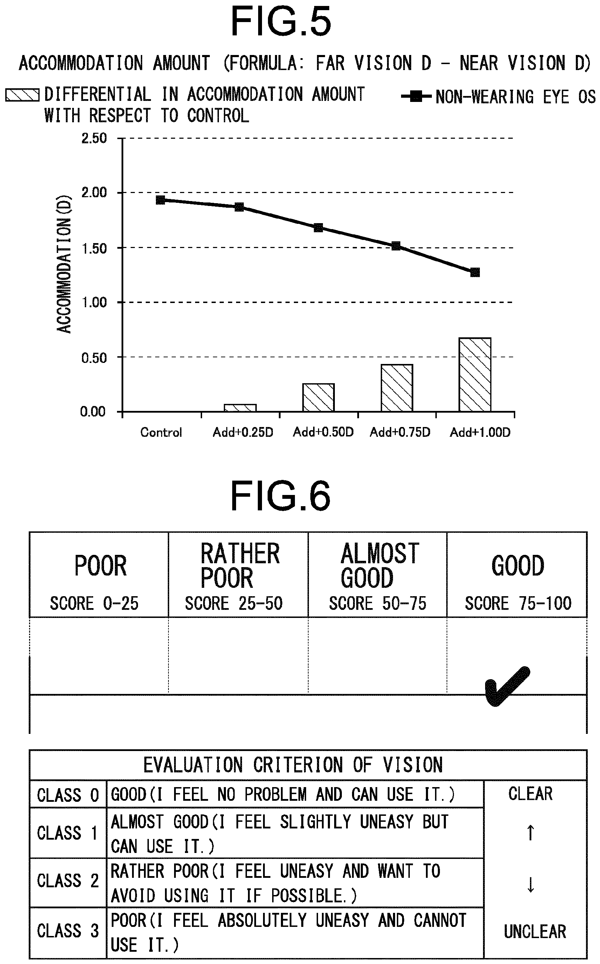

The actual measurements obtained from the five test subjects as the subject are shown in FIG. 5 with their averages. Note that the average age of the five test subjects was 36.4±6.3 years old. Also, with regard to the average refraction values of the eyes of the five test subjects, the spherical lens power (P) was -1.61±2.01D, the cylindrical lens power (C) was -0.27±1.10D, and the cylindrical axis angle (A) was 87.3±6.0 degrees.

As shown in FIG. 5, as the additional power of the worn contact lens 12 increases, the accommodation amount of the naked eye decreases. Thus, they have an apparent correlation with each other.

In addition to the measurement of the accommodation amount of the eye in the worn state of each contact lens 12, the Quality of Vision (QOV) was also measured. Specifically, for each state of far vision and near vision, the vision by the wearing eye of the contact lens was measured by obtaining the subjective evaluation of the test subjects with a visual evaluation scale (VAS: Visual Analog Scale). The VAS is in widespread use as the indicator when acquiring the subjective ache, pain or the like in the medical field as the objective data. As shown in FIG. 6, the actually used VAS has the format in which the test subjects put a checkmark at the corresponding location on the straight evaluation line drawn in the center. Then, the location of the checkmark of each test subject is converted into a score by an analog distance with the left end of the line being 0, while the right end of the line being 100, so as to obtain the measurement results.

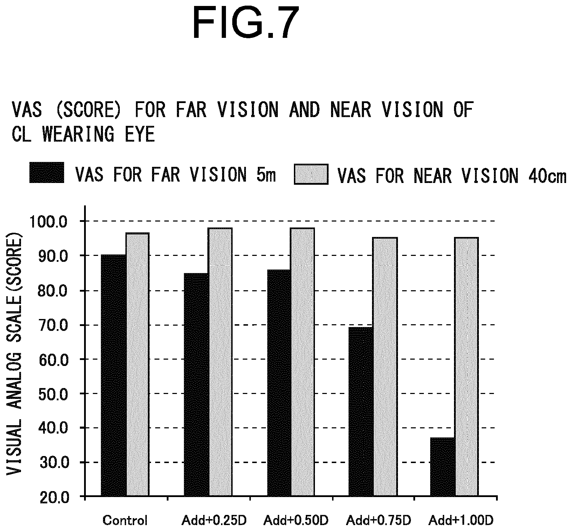

The measurement results of visions obtained in this way is shown in FIG. 7 with their averages of the evaluation scores of VAS. As will be appreciated from the measurement results in FIG. 7, the change in the additional power of the worn contact lens 12 had little effect on the near vision. On the other hand, for the far vision, it was found that the score fell when the additional power exceeded +0.50D or thereabout, and although the evaluation of 69 points was achieved at +0.75D, the evaluation at +1.00D was 37 points, which is below the evaluation of 50 points that is considered to be the lower limit for continuous use in daily life.

From the measurement results of the above-described tests, the following facts can be confirmed. Namely, during wear of the contact lens 12 having the additional power, it is difficult to improve the size of the accommodation lag generated during near vision by setting the additional power, that is, to set the size of the accommodation lag to the desired value according to the magnitude of the additional power. However, by setting the additional power, it is possible to moderate the size of the accommodation amount of the crystalline lens when the eye reacts during near vision, and to decrease the size of the accommodation amount of the crystalline lens according to the magnitude of the additional power. Specifically, by wearing the contact lens 12 having the additional power, in comparison with the case of wearing the spherical contact lens 12, it is possible to decrease the accommodation amount induced in the crystalline lens during near vision, as well as to control the accommodation amount of the crystalline lens owing to the additional power.

Moreover, when this fact is considered concomitantly with the above description that the mechanism of the myopia progression suppression effect based on the accommodation lag theory is denied but the myopia progression suppression effect itself owing to wearing of the contact lens having the additional power is confirmed statistically as well, it is possible to suggest a novel, optical and physiological mechanism of myopia progression suppression, which might best be described as mechanical tonic accommodation relaxation theory in the eye.

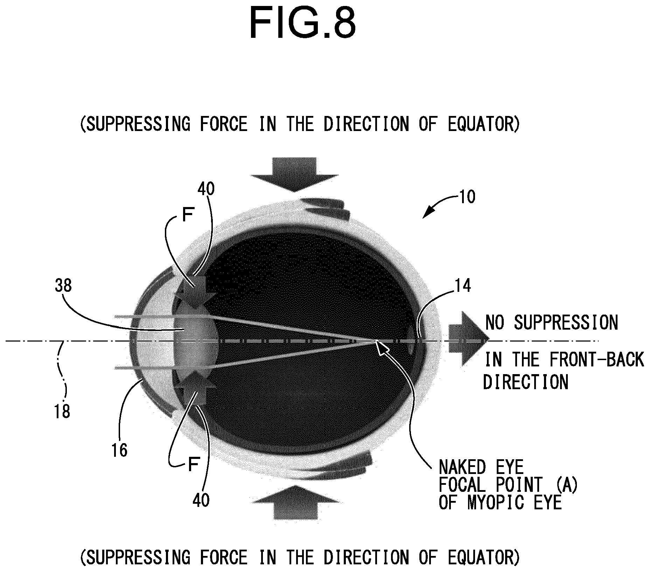

Specifically, as shown in FIG. 8, for the myopic eye 10 as the human eye, which has a naked eye focal point (A) in front of the retina 14 on the optical axis during far vision, a contact lens for which a proper correction power is set to provide a proper vision for far vision is worn. However, in the worn state of such contact lens, during near vision, correction of myopia turns out excessive and a focal point is formed behind the retina 14. Therefore, during near vision, this near vision focal point is accommodated to the retina 14 side due to the accommodation ability of a crystalline lens 38 of the myopic eye 10, so as to be brought to a clear vision.

Meanwhile, in order to increase the optical power of the crystalline lens 38 and accommodate the excessively corrected focal point position to the retina 14 side due to the accommodation ability of the eye, a compressive external force F in the diametrical direction is exerted on the crystalline lens 38 from the ciliary zonule by tensing a ciliary muscle 40 comprising circular fibers and meridional fibers. Since the tension of the ciliary muscle 40 will be exerted on the inside face of the eyeball by passing through the ora serrata or the like, the force vector of the intraocular muscles including the ciliary muscle 40 becomes stronger. As a result thereof or the like, growth of the eyeball in the direction of equator will be suppressed, while growth in the direction of ocular axis, namely the front-back direction, will be accelerated. Accordingly, the theory that, if the tension of the ciliary muscle 40 required for accommodation of the crystalline lens 38 continues due to a continuous near work or the like, the eyeball is suppressed in the diametrical direction while continuing to grow in the axial direction, is physiologically reasonable. Besides, the progression of myopia due to growth of the ocular axis length is reasonable ophthalmologically as well.

Therefore, it is apparent from the above-described tests that by wearing the contact lens for which the additional power is set to the peripheral portion of the optical part, for the properly corrected myopic eye, it is possible to reduce the accommodation amount during near vision, namely the degree of tension of the ciliary muscle 40. Moreover, it was also confirmed that the reduction amount of the degree of tension of the ciliary muscle 40 in the properly corrected myopic eye can be accommodated and set by the additional power.

Thus, by wearing the contact lens having the additional power, in the myopic eye 10, the excessive tension of the ciliary muscle 40 during near vision, and hence the force exerted on the eyeball for suppressing the growth in the direction of equator, will be relaxed. In accordance therewith, acceleration of the growth in the direction of ocular axis will be suppressed, thereby obtaining myopia progression suppression effect.

Here, as a result of review and confirmation including the above-described tests by the inventors, in order to appropriately obtain the myopia progression suppression effect based on the mechanical tonic accommodation relaxation theory of the eye described above, it is effective to provide a tonic accommodation relaxation region in which an additional power whose maximum value is from +0.25 to +0.75 diopters is set to the outer peripheral portion of the optical region. More preferably, by setting the maximum value within the additional power range of +0.25 to +0.50 diopters, it is possible to attain even better QOV with stability.

It should be appreciated that if the additional power is less than +0.25D, it is difficult to sufficiently achieve relaxation of tension of accommodation and myopia progression suppression based thereon. Meanwhile, it should also be concerned that if the additional power is greater than +0.75D, there may be a risk that it is difficult to obtain a sufficient quality of vision during far vision. Additionally, with the additional power set within the range described above, for example, in the case where a contact lens having an additional power of +0.5D is worn by an infant myopic patient, it was demonstrated through the tests by the inventors that there still exist hyperopic focal errors in the majority of the measured eyes over the wide vision range with respect to the eye optical axis (10 degrees, 20 degrees, and 30 degrees for the ear-side visual angle and the nose-side visual angle). Thus, since such additional power is not so large as to improve the off-axis aberration by bringing the focal point off the optical axis to in front of the retina, even in consideration of movement of the contact lens on the cornea, good quality of vision can be ensured.

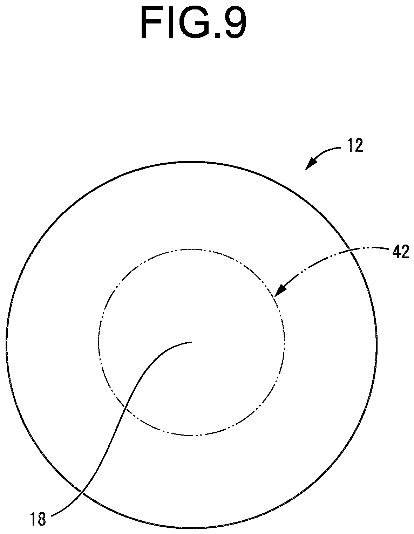

Specifically, as depicted in FIG. 9, in an optical part 42 provided in the approximately center portion of the contact lens 12, a proper correction region is provided in which a proper correction power that gives a properly corrected vision on the lens optical axis 18 during far vision to the myopic eye 10 wearing the lens. Besides, in the optical part 42, a graded additional power region is provided as the tonic accommodation relaxation region in which the additional power is set so as to gradually become larger from the lens optical axis 18 toward the outer periphery. The additional power in the tonic accommodation relaxation region will preferably be set so as to provide the power profile in the radial direction as shown in aforementioned FIG. 4. That is, it is preferable that the graded additional power region is set within the range such that 0 mm < r ≤ 3.5 mm where r is a radial dimension from the optical center, and the additional power which is maximum in the outermost peripheral portion of the graded additional power region is from +0.25 to +0.75 diopters.

Note that as shown in FIG. 4, it is even more preferable to provide a constant additional power region in the outermost peripheral portion of the optical part 42 which has a constant maximum additional power and extends in the radial direction, in order to relax the excessive tension of the crystalline lens 38 and the ciliary muscle 40 during near vision and suppress the myopia progression according to the present invention. However, it is not essential to provide such constant additional power region. Specifically, while FIG. 4 illustrates a mode in which the constant additional power region and the graded additional power region constitute the tonic accommodation relaxation region, the tonic accommodation relaxation region may be constituted by the graded additional power region only. Also, other than the additional power profile shown in FIG. 4 in which the additional power continuously changes in the radial direction, it could also be possible to employ an additional power profile in which the additional power changes in a stepwise manner, for example. Thus, no limitation is imposed as to the change mode of the additional power.

Incidentally, it has been demonstrated by the inventors that by setting the additional power by using the above-described range and pattern, it is possible to exhibit the myopia progression suppression effect without hampering everyday life. Specifically, with respect to an infant myopic patient, a clinical study was conducted in which the patient separately wore and compared for a long period of time a soft contact lens for which the additional power of +0.5D is set with the power profile shown in FIG. 4 and a spherical soft contact lens as Comparative Example in which no additional power is set. As a result, the inventors have obtained test data showing that in comparison with the spherical soft contact lens of Comparative Example, for the soft contact lens for myopia progression suppression of the present invention, no significant difference was observed in the corrected vision and the subjective vision appeal, and moreover, the extension amount of the ocular axis length after 12 months was significantly suppressed.

An embodiment of the present invention has been described in detail above, but the present invention shall not be construed as limited in any way to the specific disclosures in the embodiment.

For example, it is preferable to set the correction power and the additional power required for realizing a proper correction specifically based on the measurement results of the accommodation function of the subject human eye, for example, the measurement results of the naked vision based on the accommodation ability remaining in the crystalline lens, while considering the living environment, tastes or the like of the wearer. At that time, in the center portion of the optical part, it would also be acceptable to set the region having the correction power required for realizing a proper correction, namely the proper correction power that gives a focal point for forming an image on the retina during far vision, not only on the optical axis but also over the region extending from the optical axis for a prescribed distance in the radial direction.

In addition, in the contact lens according to the present invention, it is desirable that the optical center point where the optical center axes intersect in the optical part be coincident with the ophthalmologic optical axis during wear of the contact lens. Therefore, in the case where, on the stable position of the contact lens on the cornea, the geometric center of the contact lens is away from the center of the pupil, which is the ophthalmologic center point, the optical axis of the optical part may be set so as to be offset from the geometric center of the contact lens. In such case, as the means for positioning the contact lens on the cornea in the circumferential direction during wear of the lens, it would be possible to adopt publicly known circumferential rest positioning means such as, for example, the "truncation method" disclosed in Japanese Unexamined Utility Model Publication No. JP-U-S48-013048 etc., the "prism ballast method" disclosed in Japanese Unexamined Patent Publication No. JP-A-H11-258553 etc., the "slab-off method (double thin method)" disclosed in Japanese Unexamined Patent Publication No. JP-A-H8-304745 etc., and the "peri-ballast method" disclosed in U.S. Patent No. 5,100,225 etc., or the like. Besides, it is preferable to put an indicator on the contact lens for visually checking the circumferential position such as left and right in wearing.

Furthermore, when manufacturing a contact lens by providing the optical part with optical characteristics in which the additional power according to the present invention is set and determining the lens front and back surface shapes, the lens can be formed in a way similar to the conventional ones including the conventionally known cutting processes such as the lathe-cutting method, molding processes such as the molding method, and the spin-casting method, or a combination of these.

At that time, the optical surface to which the additional power is set is not specified to either one of the lens front and back surfaces, but can be selected in consideration of the required optical characteristics, the dimension of each part, the manufacturing method to be adopted, or the like. For example, by setting the additional power to the lens front surface, it is possible to make the lens back surface to be a base curve having a curving surface shape corresponding to the cornea shape. Meanwhile, by setting the additional power to the lens back surface, the number of mold types for the lens front surface can be reduced, thereby making the manufacture easier as well. Also, it would be acceptable to set the additional power to be divided between the lens front surface and the lens back surface, so that even if the additional power is high, variation in shapes on the lens front and back surfaces can be minimized.

In addition, if the wearer has astigmatism, a cylindrical lens power for correcting astigmatism can be set to at least one of the lens front surface and the lens back surface of the optical part.

Note that in the peripherally outside of the optical part of the contact lens, the same as a general contact lens for myopia, a peripheral part is provided which has a shape corresponding to the eyeball surface so as to stabilize the position of the contact lens on the eyeball.

Moreover, the lens type of the contact lens to which the present invention is applied may be either a soft type or a hard type. Also, its material is not limited to any particular one. For example, for a soft-type contact lens having a myopia progression suppression capability, in addition to the publicly known hydrated material such as PHEMA (polyhydroxyethyl methacrylate) and PVP (polyvinyl pyrrolidone), a non-hydrated material etc. such as acrylic rubber and silicone are also adoptable. Besides, it is possible to make a hard-type contact lens having a myopia progression suppression capability using a material for a rigid gas permeable lens (RGP lens) etc. such as PMMA (polymethyl methacrylate) and SiMA/MMA polymer. Here, from the perspective of position stability on the cornea, a soft type would be preferable.

It is also to be understood that the present invention may be embodied with various changes, modifications and improvements which may occur to those skilled in the art, without departing from the spirit and scope of the invention.

### KEYS TO SYMBOLS

10: myopic eye (human eye), 12: contact lens, 18: lens optical axis, 38: crystalline lens, 42: optical part

## Claims

1. A designing method of a contact lens for myopia progression suppression comprising:
providing a tonic accommodation relaxation region in which an additional power whose maximum value is from +0.25 to +0.75 diopters is set with respect to a correction power that is required for realizing a proper correction, the additional power being capable of relaxing a tonic accommodation without improving an aberration off an optical axis and an accommodation lag on the optical axis; and
providing a proper correction region in which the additional power is not set at least on an optical center.

2. A manufacturing method of a contact lens for myopia progression suppression comprising:
determining lens front and back surface shapes for realizing the correction power of the proper correction region and the additional power of the tonic accommodation relaxation region that are set according to the designing method as defined in claim 1; and
manufacturing the contact lens having the lens front and back surface shapes.

3. A contact lens for myopia progression suppression comprising:
a tonic accommodation relaxation region in which an additional power whose maximum value is from +0.25 to +0.75 diopters is set with respect to a correction power that is required for realizing a proper correction, the additional power being capable of relaxing a tonic accommodation without improving an aberration off an optical axis and an accommodation lag on the optical axis; and
a proper correction region in which the additional power is not set at least on an optical center.

4. The contact lens for myopia progression suppression according to claim 3, wherein
the proper correction region is provided in a center portion thereof,
a constant additional power region is provided in an outer peripheral portion of an optical part with a prescribed radial width,
a graded additional power region is provided in which the additional power gradually changes from the proper correction region toward the constant additional power region, and
the constant additional power region and the graded additional power region constitute the tonic accommodation relaxation region.

5. The contact lens for myopia progression suppression according to claim 4, wherein
the graded additional power region is set within a range such that 0 mm < r ≤ 3.5 mm where r is a radial dimension from the optical center, and
the additional power in an outermost peripheral portion of the graded additional power region is from +0.25 to +0.75 diopters.
